# EUROPEAN PATENT SPECIFICATION

(11) **EP 0 513 355 B1**
(45) Date of publication and mention of the grant of the patent: **21.06.1995**
(21) Application number: 91907147.2
(22) Date of filing: 03.12.1990
(51) Int. Cl.: A61G 5/02

(54) **TRANSPORTATION MEANS FOR INVALIDS**
TRANSPORTEINRICHTUNG FÜR INVALIDE
MOYEN DE TRANSPORT POUR PERSONNE INVALIDE

(43) Date of publication of application: 19.11.1992
(73) Proprietor: MEZHDUNARODNY FOND MILOSERDIA I ZDOROVYA, Moscow, 101000 (RU)
(72) Inventor: LUKYANOV, Sergei Nikolaevich, Moscow, 113587 (SU)
(74) Representative: Godwin, Edgar James
(86) International application number: PCT/SU90/00257
(87) International publication number: WO 92/10156

(56) References cited:
- BE-A- 901 147
- DE-A- 3 809 044
- SU-A- 171 281
- SU-A- 1 138 156
- SU-A- 1 210 824
- US-A- 4 560 181
- US-A- 4 762 332
- US-A- 4 798 395
- US-A- 4 865 344

## Description

### Field of Art

The invention relates to transport facilities and, more particularly, to wheelchairs for invalids.

### Prior Art

Known in the prior art is a transport vehicle comprised of a frame with a seat, installed on driven wheels and on one driving wheel having a yoke secured in the frame bearing, a hand lever installed on the frame with a provision for swinging and provided with a turning handle connected by shafts and bevel gears with the driving wheel yoke. The vehicle has also a transmission mechanism which converts the swinging motion of the lever into the rotary movement of the driving wheel, and an overrunning clutch mounted on the driving wheel axle.

The transmission mechanism has the form of a block installed on the driving wheel axle and connected by the overrunning clutch with the driving wheel at one side and by a flexible tie with the frame post at the other (SU, A, 1138156).

The known transport vehicle features but a low manoeuvrability since it cannot move sideways. The limited nature of its motion is caused by the fact that the driven wheels are rigidly secured to the frame and, consequently, cannot turn around their vertical axis. When the driving wheel turns sidewise, the vehicle only turns around one of its driven wheels but fails to move sidewise. Besides, the provision of only one driving wheel is unable to impart side notion to the vehicle due to an insufficient adhesion of the wheel to the road.

### Disclosure of the Invention

The main object of the invention lies in providing a wheelchair for invalids which would comprise such additional elements which would add to its maoneuvrability.

This object is attained by providing Transport means for invalids comprising a frame with a seat installed on driven and driving wheels with the driving wheel yoke secured in the frame bearing, a hand lever installed on the frame with a provision for swinging and, having a turning handle connected to the driving wheel yoke via shafts and bevel gears, a transmission mechanism which converts the swinging motion of the lever into the rotary motion of the driving wheel, and an overrunning clutch mounted on the driving wheel axle wherein, according to the invention, there is a second driving wheel and a second hand lever with a turning handle connected by shafts and bevel gears with the yoke of the second driving wheel, the transmission mechanism of each driving wheel comprising a guide made in the yoke of its driving wheel and accommodating a rod with a rack, passing through the frame bearing, a gear mounted on the driving wheel axle and interacting with the rack and with the overrunning clutch of its driving wheel, and a coupling connecting one of the shafts with the rod while the driven wheel is self-aligning.

This arrangement ensures a high manoeuvrability of the wheelchair because when both driving wheels are turned to the side, the wheel chair moves sideways and the self-aligning driven wheel does not create a point of turn. If the driving wheels are set out of parallel, the point of rotation of the wheelchair is determined by the intersection of the driving wheels axles.

It is reasonable that the rod of each transmission mechanism should be provided with an additional rack located on the side of the driving wheel axle opposite to the first rack and interacting with its driving wheel via the additional gear and overrunning clutch.

Such a layout rules out the free travel of the hand levers because the racks transmit rotation to the driving wheel in turns. On the upward stroke of the rod, the rotary motion is transmitted by one rack while the other rack moves idle due to the free travel of the overrunning clutch. On the downward stroke of the rod the rotary movement is transmitted by the other rack while the first one moves idle due to the free travel of the other overrunning clutch.

To promote reliability of design, it is practicable that the coupling in each transmission mechanism, connecting the rod with the shaft should have the form of a cardan joint and that each hand lever should be secured to the frame by a hinged joint.

This arrangement permits transmitting force from the hand lever to the rod and transmitting torque from the shaft to the rods in any position of the hand lever.

In another embodiment of the wheelchair it is practicable that the coupling connecting the rod with the shaft in each transmission mechanism should be made as a Hooke's joint and each lever should be connected by a hinge to the link which latter would be secured to the frame by another hinge joint.

This arrangement also permits the force to be transmitted from the hand lever to the rod and the torque to be transmitted from the shaft to the rod in any position of the hand lever. In addition, this version is simpler in design than the preceding one.

It is practicable that the driven wheel should be self-aligned by providing its yoke with a vertical turning axle which would not intersect the rotation axle of the driven wheel.

This arrangement features a simple design of the wheelchair.

It is practicable that the yoke of each driving wheel should be provided with a beveled stop while the frame should be provided at each driving wheel with a hinged catch bearing against the stop when the driving wheel is in the front position.

This arrangement facilitates setting the driving wheels in a strictly forward position for the ahead motion of the wheelchair.

It is practicable that the frame should be provided with two articulated foot levers connected by joints with the links which, in turn, should be connected by joints with the hand levers.

The provision of foot levers facilitates the swinging motion of the hand levers and permits working the feet with the purpose of restoring their functions.

### Brief Description of the Drawings

For better understanding of the invention it will described in detail with reference to the appended drawings wherein:
Fig. 1 is a general dimetrical view of the wheelchair for invalids, according to the invention;
Fig. 2 is a general view of the wheelchair for invalids, aide view with partial cutaway sections;
Fig. 3 is a view along arrow A In Fig. 2;
Fig. 4 is a general view of the embodiments of the transmission mechanism with an additional rack, gear and overrunning clutch according to the invention, longitudinal section;
Fig. 5 is a view along line V-V in Fig. 4;
Fig. 6 is an embodiment of the lever-to-frame fastening assembly through a link, and the connecting coupling in the form of a Hooke's joint;
Fig. 7 shows the position of the catch and stop for the R.H. driving wheel in its front position, a longitudinal section;
Fig. 8 shows the position of the catch and stop for the L.H. driving wheel in its front position, a longitudinal section.

### Beat Mode of Carrying out the Invention

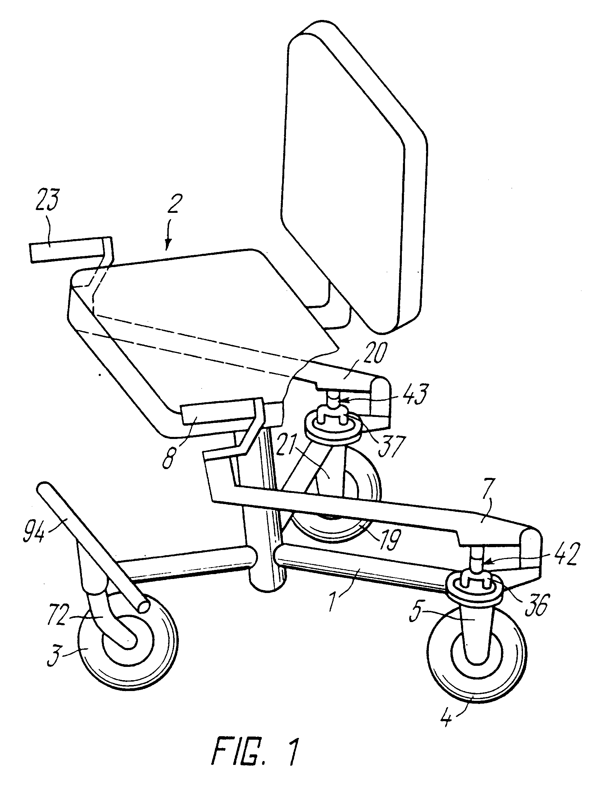

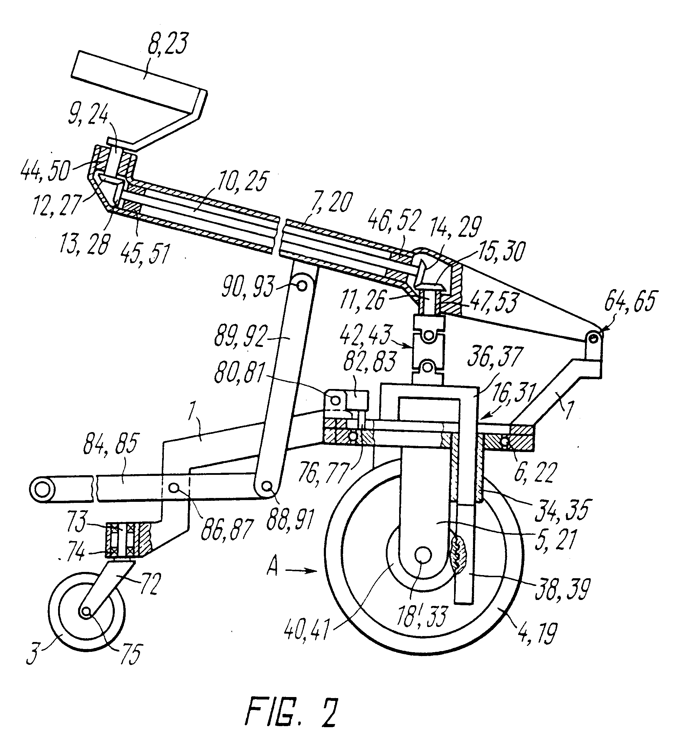

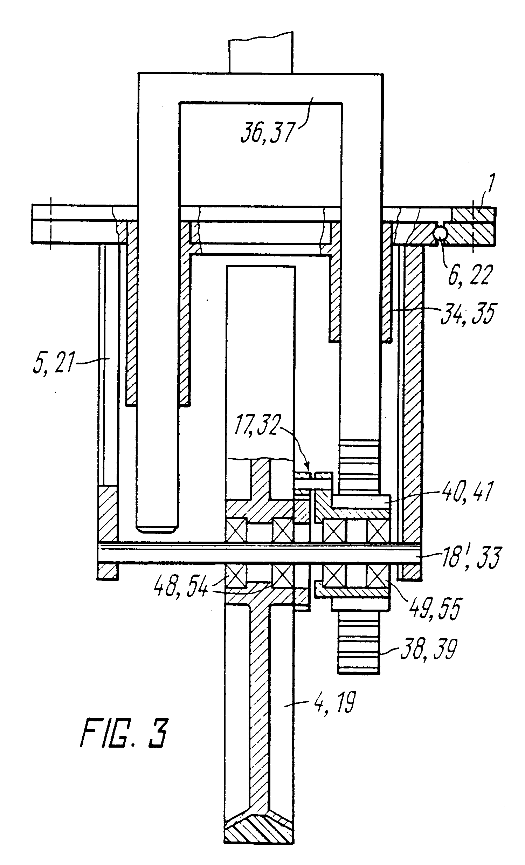

The disclosed wheelchair for invalids comprises a frame 1 (Fig. 1) with a seat 2 secured thereto and mounted on one driven wheel 3 and one driving wheel 4 provided with a yoke 5 fastened in a bearing 6 (Fig. 2) of the frame 1. The wheelchair also has a hand lever 7 capable of swinging on the frame 1 and provided with a handle 8 for turning the driving wheel 4 connected with the yoke 5 of the driving wheel 4 by shafts 9, 10, 11 and bevel gears 12, 13, 14, 15, a transmission mechanism 16 which converts the swinging motion of the lever 7 into the rotary motion of the driving wheel 4, and an overrunning clutch 17 (Fig. 3) mounted on the axle 18 of the driving wheel 4.

According to the invention, the wheelchair for invalids comprises a second driving wheel 19 (Fig. 1) and a band lever 20 whose designs are similar, respectively, to the driving wheel 4 and hand lever 7.

The driving wheel 19 is fastened to the frame 1 via its yoke 21 secured in the bearing 22 (Fig. 2) of the frame 1 while the lever 20 is mounted on the frame 1 with a provision for swinging motion.

The hand lever 20 carries a handle 23 for turning the driving wheel 19, said handle 23 being connected with the yoke 21 of the driving wheel 19 by shafts 24, 25, 26 and bevel gears 27, 28, 29, 30.

The wheelchair for invalids according to the invention also comprises a second transmission mechanism 31 which converts the swinging motion of the lever 20 into the rotary motion of the driving wheel 19, and a second overrunning clutch 32 (Fig. 3) of the driving wheel 19, mounted on its axle 33.

Each transmission mechanism 16, 31 converting the swinging motion of its lever 7, 20 into the rotary motion of its driving wheel 4, 19 has a guide 34, 35 located in the yoke 5, 21 of the corresponding wheel 4, 19. The guide 34, 35 accommodates a rod 36, 37 passing through the bearing 6, 22 of the frame 1 and carrying a rack 38, 39. Besides, each transmission mechanism 16, 31 has a gear 40, 41 installed on the axle 18, 33 of its driving wheel 4, 19 and interacting with the rack 38, 39 and the overrunning clutch 17, 32 of its driving wheel 4, 19, and a coupling 42, 43 (Fig. 2) connecting one of the shafts 11, 26 with the rod 36, 37.

The shafts 9, 10, 11 of the L.H. hand lever 7 (Fig. 2) are installed in the bearings 44, 45, 46, 47.

The L.H. driving wheel 4 (Fig. 3) is mounted on bearings 48 while its gear 40, on bearings 49. The shafts 24, 25, 26 of the R.H. hand lever 20 (Fig. 2) are mounted in bearings 50, 51, 52, 53. The R.H. driving wheel 19 (Fig. 3) is installed on bearings 54 while its gear 41, on bearings 55.

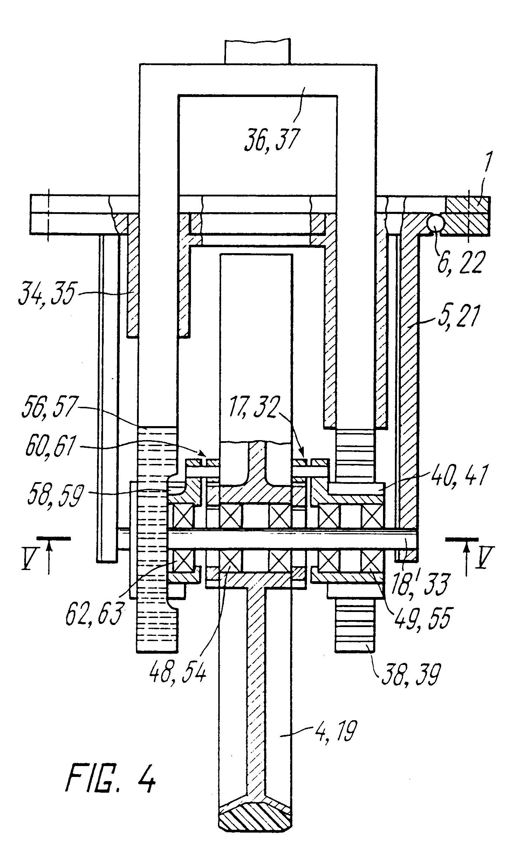

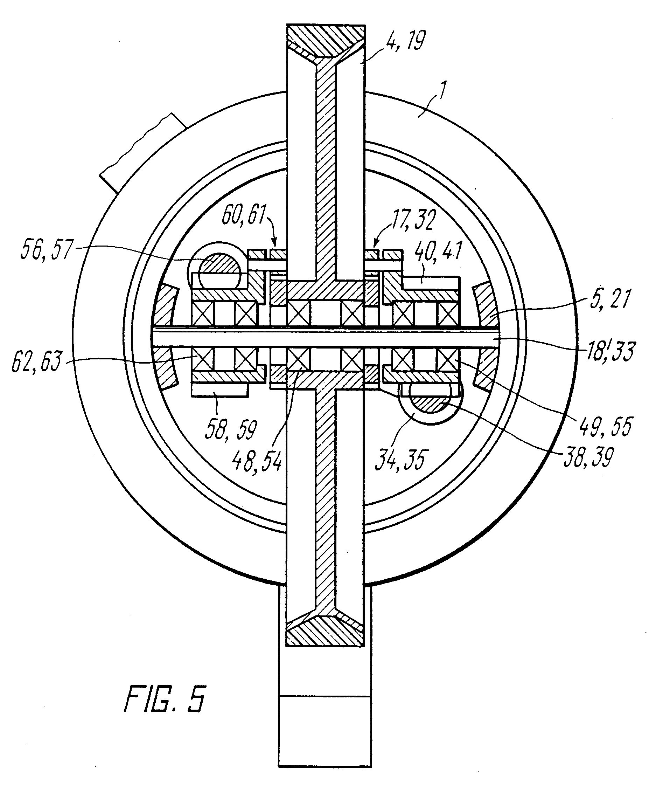

The wheelchair for invalids may be made without idle strokes of the hand levers 7, 20. For this purpose the rod 36, 37 of each transmission mechanism 16, 31 has an additional rack 56, 57 (Figs 4, 5) arranged on the side of the axle 18, 33 of the driving wheel 4, 19 opposite to the first rack 38, 39, and interacting via additional gear 58, 59 and overrunning clutch 60, 61 with its driving wheel 4, 19. The clutches 17, 60 of the driving wheel 4 run free in the same direction and so are the clutches 32, 61 of the driving wheel 19. The gears 58, 59 are mounted on bearings 62, 63.

In another embodiment of the wheelchair for invalids each transmission mechanism 16, 31 may have a coupling 42, 43 connecting the rod 36, 37 with the shaft 11, 26 in the form of a cardan joint (Fig. 2) and each hand lever 7, 20 is secured to the frame 1 by means of joint 64, 65.

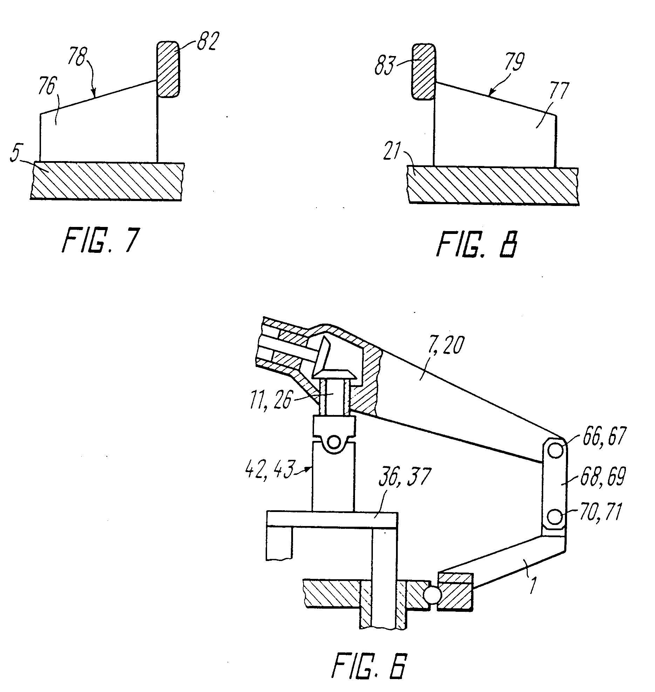

In a simplified version of the wheelchair each transmission mechanism 16, 31 may have a coupling 42, 43 connecting the rod 36, 37 with the shaft 11, 26 in the form of a Hooke's joint (Fig. 6) and each hand lever 7, 20 is fastened via the joint 66, 67 to the link 68, 69 which, in turn, is fastened to the frame 1 by another joint 70, 71.

Self-alignment of the driven wheel 3 is achieved by providing the yoke 72 (FIG. 2) of the driven wheel 3 with a vertical turning axle 73 installed in bearings 74 and not intersecting the rotation axle 75 of the driven wheel 3. The wheelchair may have two and more self-aligning driven wheels.

To facilitate bringing the driving wheels to a strictly front position, the yoke 5, 21 of each driving wheel 4, 19 has a stop 76 (Fig. 7, 77 (Fig. 8) provided with a bevel 78, 79 while the frame 1 carries a catch 82, 83 at each driving wheel 4, 19. This catch bears against the stop 76, 77 when the driving wheel 4, 19 is in the front position, and is hinged on an axle 80, 81 (Fig. 2). The direction of bevels 78, 79 on the stops 76, 77 of the R.H. and L.H. driving wheels 4, 19 is shown in Figs 7 and 8.

Secured additionally by joints 86, 87 to the frame 1 may be two foot levers 84, 85 (Fig. 2). The L.H. foot lever 84 is connected by a joint 88 with a link 89 which, in turn, is connected by a joint 90 with the L.H. hand lever 7. The R.H. foot lever 85 is connected by a joint 91 with a link 92 which, in turn, is connected by a joint 93 with the R.H. hand lever 20. If the foot drive is not required, the frame 1 is provided with a footrest 94 (Fig. 1).

The wheelchair for invalids functions as follows.

The patient operates the levers 7, 20 by swinging down their handles 8, 23. The L.H. hand lever 7 transmits the force via the shafts 9, 10, 11, coupling 42, rod 36, rack 38, gear 40, and overrunning clutch 17 to the L.H. driving wheel 4. The R.H. hand lever 20 transmits force via the shafts 24, 25, 26, coupling 43, rod 37, rack 39, gear 41 and overrunning clutch 32 to the R.H. driving wheel 19.

On their upward stroke the levers 7, 20 execute an idle motion and do not transmit any force due to the free travel of the clutches 17, 32.

If the L.H. wheel 4 is provided with an additional rack 56, gear 58 and overrunning clutch 60, these parts on the upward stroke of the lever 7 transmit the force to the L.H. driving wheel 4. If, however, the R.H. wheel is provided with additional rack 57, gear 59 and, overrunning clutch 61, they transmit the force to the R.H. driving wheel 19 on the upward stroke of the lever 20.

If the frame 1 is provided with L.H. 84 and R.H. 85 foot levers, the patient operates them with his feet and assists the upward swinging motions of the hand levers 7, 20 via the links 88, 89, 90, and 91, 92, 93.

The travelling direction of the wheelchair is selected by turning the handles 8, 23. The L.H. handle 8 turns the L.H. driving wheel 4 via shafts 9, 10, 11, bevel gears 12, 13, 14, 15, coupling 42, rod 36, guide 34 and yoke 5. The R.H. handle 23 turns the R.H. driving wheel 19 via the shafts 24, 25, 26, bevel gears 27, 28, 29, 30, coupling 43, rod 37, guide 35 and yoke 21. For straight-ahead movement, the driving wheels 4, 19 shall be brought to a strictly front position. For this purpose the L.H. handle 8 shall be rotated clockwise until the step 76 comes to bear against the catch 82 while the R.H. handle 23 shall be rotated counterclockwise until the stop 77 cones to bear against the catch 83. Reverse rotation of the handles 8, 23 is unhampered due to sliding of the catches 82, 83 over the bevels 78, 79.

For sidewise motion, the handle 8, 23 and, correspondingly, wheel 4, 19 shall be turned sideways. The wheelchair is braked by sharp turning of the handles 8, 23.

The wheelchair can start moving from rest in any direction without preliminary turning by merely rotating the handles 8, 23 in parallel in the desired direction. Besides, it can rotate around any point on a surface. The point of rotation is determined by the intersection of the axles 18, 33 of the driving wheels 4, 19.

The kinematic layout of the wheelchair for invalids ensures its long-lasting service.

### Industrial Applicability

The present invention will be most useful in the capacity of a highly-manoeuvrable man-operated transport facility for invalids.

Besides, the invention may be used both by disabled and able bodies persons as a training aid.

## Claims

1. Transport means for invalids comprising a frame (1) with a seat (2) installed on driven and driving wheels (3, 4), the yoke (5) of the latter being secured in a bearing (6) of the frame (1), a hand lever (7) installed on the frame (1) with a provision for swinging motion and provided with a handle (8) for turning the driving wheel (4), said handle (8) being connected with the yoke (5) of the driving wheel (4) by shafts (9, 10, 11) and bevel gears (12, 13, 14, 15), a transmission mechanism (16) which converts the swinging motion of the lever (7) into the rotary motion of the driving wheel (4), and an overrunning clutch (17) mounted on the axle (18) of the driving wheel (4) CHARACTERIZED in that it has a second driving wheel (19) and a second hand lever (20) with a turning handle (23) connected by shafts (24, 25, 26) and bevel gears (27, 28, 29, 30) with the yoke (21) of the second driving wheel (19), the transmission mechanism (16, 31) of each driving wheel 4, 19) has a guide (34, 35) made in the yoke (5, 21) of its driving wheel (4, 19) and accommodating a rod (36, 37) with a rack (38, 39), said rod passing through the bearing (6, 22) of the frame (1), a gear (40, 41) installed on the axle (18, 33) of the driving wheel (4, 19) and intersecting with the rack (38, 39) and with the overrunning clutch (17, 32) of its driving wheel (4, 19), and a coupling (42, 43) connecting one of the shafts (11,26) with the rod (36, 37) while the driven wheel (3) is self-aligning.

2. Transport means for invalids as claimed in Claim 1 CHARACTERIZED in that the rod (36, 37) of each transmission mechanism (16, 31) is provided with an additional rack (56, 57) located on the other side of the axle (18, 33) of the driving wheel (4, 19) from the first rack (38, 39) and interacting with its driving wheel (4, 19) via additional gear (58, 59) and overrunning clutch (60, 61).

3. Transport means for invalids as claimed in Claim 1 CHARACTERIZED in that the coupling (42, 43) connecting the rod (36, 37) with the shaft (11, 26) in each transmission mechanism (16, 31) has the form of a cardan joint and each hand lever (7, 20) is secured to the frame (1) by a joint (64, 65).

4. Transport means for invalids as claimed in Claim 1 CHARACTERIZED in that the coupling (42, 43) connecting the rod (36, 37) with the shaft (11, 26) has the form of a Hooke's joint and each hand lever (7, 20) is secured by the joint (66, 67) to the link (68, 69) which, in turn, is fastened to the frame 1 by another joint (70, 71).

5. Transport means for invalids as claimed in Claim 1 CHARACTERIZED in that the yoke (72) of the driven wheel (3) has a vertical turning axle (73) not intersecting the rotation axle (75) of the driven wheel (3).

6. Transport means for invalids as claimed in Claim 1 CHARACTERIZED in that the yoke (5, 21) of each driving wheel (4, 19) carries a stop (76, 77) with a bevel (78, 79) and in that fastened to the frame (1) at each driving wheel (4, 19) is a catch (82, 83) hinged on an axle (80, 81) and bearing against the stop (76, 77) when the driving wheel (4, 19) is in the front position.

7. Transport means for invalids as claimed in Claim 1 CHARACTERIZED in that it comprises two foot levers (84, 85) fastened by joints, (86, 87) to the frame (1) and connected by joints (88, 91) with the links (89, 92), which, in turn, are connected by the links (90, 93) with the hand levers (7, 20).

## Patentansprüche

1. Transportfahrzeug für Behinderte, das umfaßt: einen Rahmen (1) mit einem Sitz (2), der auf dem angetriebenen und dem Antriebsrad (3, 4) angeordnet ist, wobei das Joch (5) des Antriebsrades in einem Lager (6) des Rahmens (1) befestigt ist, einen Handhebel (7), der auf dem Rahmen (1) schwenkbar angeordnet und mit einem Griff (8) zum Drehen des Antriebsrades (4) ausgestattet ist, wobei der Griff (8) über Wellen (9, 10, 11) und Kegelradgetriebe (12, 13, 14, 15) mit dem Joch (5) des Antriebsrades (4) verbunden ist, ein Schaltgetriebe (16), das die Schwenkbewegung des Hebels (7) in die Drehbewegung des Antriebsrades (4) umwandelt, und eine auf der Achse (18) des Antriebsrades (4) angeordnete Freilaufkupplung (17),
**dadurch gekennzeichnet**,
daß es umfaßt: ein zweites Antriebsrad (19) und einen zweiten Handhebel (20) mit einem Drehgriff (23), der über Wellen (24, 25, 26) und Kegelradgetriebe (27, 28, 29, 30) mit dem Joch (21) des zweiten Antriebsrades (19) verbunden ist, wobei das Schaltgetriebe (16, 31) jedes Antriebsrades (4, 19) eine Führung (34, 35) aufweist, die im Joch (5, 21) des entsprechenden Antriebsrades (4, 19) angeordnet ist, und eine Stange (36, 37) mit einer Zahnstange (38, 39) aufnimmt, die durch das Lager (6, 22) des Rahmens (1) hindurchgeht, ein Getriebe (40, 41), das auf der Achse (18, 33) des Antriebsrades (4, 19) montiert ist und mit der Zahnstange (38, 39) und der Freilaufkupplung (17, 32) des entsprechenden Antriebsrades (4, 19) zusammenwirkt, sowie eine Kupplung (42, 43), die eine der Wellen (11, 26) mit der Stange (36, 37) verbindet, und daß sich das angetriebene Rad (3) selbst ausrichtet.

2. Transportfahrzeug für Behinderte gemäß Anspruch 1, **dadurch gekennzeichnet**, daß die Stange (36, 37) jedes Schaltgetriebes (16, 31) mit einer zusätzlichen Zahnstange (56, 57) ausgestattet ist, die auf der anderen Seite der Achse (18, 33) des Antriebsrades (4, 19) bezogen auf die erste Zahnstange (38, 39) angeordnet ist, und über ein zusätzliches Getriebe (58, 59) und eine Freilaufkupplung (60, 61) mit dem entsprechenden Antriebsrad (4, 19) zusammenwirkt.

3. Transportfahrzeug für Behinderte gemäß Anspruch 1, **dadurch gekennzeichnet**, daß die Kupplung (42, 43), die die Stange (36, 37) mit der Welle (11, 26) in jeden Schaltgetriebe (16, 31) verbindet, die Form eines Kardangelenks aufweist, und daß jeder Handhebel (7, 20) durch ein Gelenk (64, 65) am Rahmen (1) befestigt ist.

4. Transportfahrzeug für Behinderte gemäß Anspruch 1, **dadurch gekennzeichnet**, daß die Kupplung (42, 43), die die Stange (36, 37) mit der Welle (11, 26) verbindet, die Form eines Wellengelenks aufweist, und daß jeder Handhebel (7, 20) durch das Gelenk (66, 67) am Verbindungsglied (68, 69) befestigt ist, das wiederum durch ein weiteres Gelenk (70, 71) am Rahmen (1) befestigt ist.

5. Transportfahrzeug für Behinderte gemäß Anspruch 1, **dadurch gekennzeichnet**, daß das Joch (72) des angetriebenen Rades (3) eine senkrechte Schwenkachse (73) aufweist, die die Drehachse (75) des angetriebenen Rades (3) nicht schneidet.

6. Transportfahrzeug für Behinderte gemäß Anspruch 1, **dadurch gekennzeichnet**, daß das Joch (5, 21) jedes Antriebsrades (4, 19) einen Anschlag (76, 77) mit einer Abschrägung (78, 79) aufweist, und daß am Rahmen (1) an jedem Antriebsrad (4, 19) ein Zapfen (82, 83) befestigt ist, der an einer Achse (80, 81) angelenkt ist und sich gegen den Anschlag (76, 77) abstützt, wenn das Antriebsrad (4, 19) die nach vorn gerichtete Stellung einnimmt.

7. Transportfahrzeug für Behinderte gemäß Anspruch 1, **dadurch gekennzeichnet**, daß es zwei Fußhebel (84, 85) umfaßt, die durch Gelenke (86, 87) am Rahmen (1) befestigt sind und durch Gelenke (88, 91) mit den Verbindungsgliedern (89, 92) verbunden sind, die wiederum durch die Gelenke (90, 93) mit den Handhebeln (7, 20) verbunden sind.

## Revendications

1. Moyen de transport pour invalides, comprenant un châssis (1) et un siège (2) installés sur des roues entraînées et d'entraînement (3, 4), la fourche (5) de ces dernières étant fixées dans un palier (6) du châssis (1), un levier à main (7) installé sur le châssis (1) avec un agencement pour un mouvement de va-et-vient et équipé d'une poignée (8) pour faire tourner la roue d'entraînement (4), la poignée (8) étant connectée à la fourche (5) de la roue d'entraînement (4) par des arbres (9, 10, 11) et par des pignons coniques (12, 13, 14, 15), un mécanisme de transmission (16) qui transforme le mouvement de va-et-vient du levier (7) en mouvement de rotation de la roue d'entraînement (4), et une roue libre (17) montée sur l'axe (18) de la roue d'entraînement (4), caractérisé en ce qu'il comporte une seconde roue d'entraînement (19) et un second levier à main (20) comportant une poignée tournante (23) connectée pour des arbres (24, 25, 26) et des pignons coniques (27, 28, 29, 30) à la fourche (21) de la seconde roue d'entraînement (19), en ce que le mécanisme de transmission (16, 31) de chaque roue d'entraînement (4, 19) comporte un guide (34, 35) réalisé dans la fourche (5, 21) de sa roue d'entraînement (4, 19) et logeant une tige (36, 37) comportant une crémaillère (38, 39), ladite tige passant à travers le palier (6, 22) du châssis (1), un pignon (40, 41) installé sur l'axe (18, 33) de la roue d'entraînement (4, 19) et interagissant avec la crémaillère (38, 39) et avec la roue libre (17, 32) de sa roue d'entraînement (4, 19), et un accouplement (42, 43) connectant un des arbres (11, 26) à la tige (36, 37) tandis que la roue entraînée (3) s'aligne automatiquement.

2. Moyen de transport pour invalides suivant la revendication 1, caractérisé en ce que la tige (36, 37) de chaque mécanisme de transmission (16, 31) est équipée d'une crémaillère supplémentaire (56, 57) située de l'autre côté de l'axe (18, 33) de la roue d'entraînement (4, 19) par rapport à la première crémaillère (38, 39) et interagissant avec sa roue d'entraînement (4, 19) par l'intermédiaire d'un pignon supplémentaire (58, 59) et d'une roue libre (60, 61).

3. Moyen de transport pour invalides suivant la revendication 1, caractérisé en ce que l'accouplement (42, 43) qui relie la tige (36, 37) à l'arbre (11, 26) dans chaque mécanisme de transmission (16, 31) a la forme d'un joint à cardan et en ce que chaque levier à main (7, 20) est fixé au châssis (1) par un joint (64, 65).

4. Moyen de transport pour invalides suivant la revendication 1, caractérisé en ce que l'accouplement (42, 43) qui relie la tige (36, 37) à l'arbre (11, 26) a la forme d'un joint de Hooke et en ce que chaque levier à main (7, 20) est fixé par le joint (66, 67) à l'élément de liaison (68, 69) qui, à son tour, est fixé au châssis (1) par un autre joint (70, 71).

5. Moyen de transport pour invalides suivant la revendication 1, caractérisé en ce que la fourche (72) de la roue entraînée (3) a un axe de rotation vertical (73) qui ne coupe pas l'axe de rotation (75) de la roue entraînée (3).

6. Moyen de transport pour invalides suivant la revendication 1, caractérisé en ce que la fourche (5, 21) de chaque roue d'entraînement (4, 19) porte un arrêt (76, 77) comportant un chanfrein (78, 79) et en ce que, fixé au châssis (1) à l'endroit de chaque roue d'entraînement (4, 19) il y a un dispositif d'arrêt (82, 83) articulé sur un axe (80, 81) et s'appuyant contre l'arrêt (76, 77) lorsque la roue d'entraînement (4, 19) est dans la position frontale.

7. Moyen de transport pour invalides suivant la revendication 1, caractérisé en ce qu'il comprend deux leviers pour pied (84, 85) fixés par des joints (86, 87) au châssis (1) et reliés par des joints (88, 91) aux éléments de liaison (89, 92) qui, à leur tour, sont reliés par les éléments de liaison (90, 93) aux leviers à main (7, 20).
